# EUROPÄISCHE PATENTSCHRIFT

(11) **EP 4 305 947 B1**
(45) Veröffentlichungstag und Bekanntmachung des Hinweises auf die Patenterteilung: **11.06.2025**
(21) Anmeldenummer: 23170567.4
(22) Anmeldetag: 28.04.2023
(51) Int. Cl.: A01D 41/127, A01D 69/06, A01D 75/18, A01F 12/56, A01F 12/58

(54) **MÄHDRESCHER**
COMBINE HARVESTER
MOISSONNEUSE-BATTEUSE

(30) Priorität: 15.07.2022 DE 102022117780
(43) Veröffentlichungstag der Anmeldung: 17.01.2024
(73) Patentinhaber: CLAAS Selbstfahrende Erntemaschinen GmbH, 33428 Harsewinkel (DE)
(72) Erfinder: Krieft, Manfred, 33428 Harsewinkel (DE); Terlutter, Michael, 33442 Herzebrock-Clarholz (DE); Koch, Markus, 48369 Saerbeck (DE)
(74) Vertreter: CLAAS Gruppe

(56) Entgegenhaltungen:
- EP-A2- 1 072 817
- CN-A- 103 621 246
- DE-U- 6 913 630
- JP-U- S55 128 547

## Beschreibung

Die vorliegende Erfindung betrifft einen Mähdrescher, umfassend eine Dreschvorrichtung sowie eine Häckselvorrichtung, welche durch ein als Riementriebe ausgebildetes, durch eine Antriebsmaschine angetriebenes Antriebsystem angetrieben und trieblich miteinander verbunden sind, sowie eine Reversiervorrichtung zum Reversieren der Dreschvorrichtung gemäß dem Oberbegriff des Anspruches 1.

Es ist bekannt, dass Erntevorgänge auch unter erschwerten Bedingungen durchgeführt werden, wobei es unvermeidbar ist, dass es unter anderem im von außen nur schwer zugänglichen Bereich einer Dreschvorrichtung des Mähdreschers zum Verdichten des Erntegutes und zu Verstopfungen kommt. Um eine Verstopfung im Bereich der Dreschvorrichtung zu beseitigen, ist ein Reversieren der Dreschvorrichtung vorgesehen. So ist aus der DE 69 13 630 U1 ein Mähdrescher bekannt, welcher eine Dreschvorrichtung mit einer Dreschtrommel aufweist. An der Dreschtrommel ist eine Reversiervorrichtung angeordnet, welche bei Rückwärtsfahrt ein Reversieren der Dreschtrommel bewirkt. Hierzu weist die Vorrichtung ein auf einer Dreschtrommelwelle angeordnetes Kettenrad sowie ein auf einer Antriebswelle des Mähdreschers angeordnetes Kettenrad auf, welche untereinander durch eine aufzulegende Kette trieblich miteinander verbindbar sind.

Ein weiterer Mähdrescher ist aus der Druckschrift EP 1 072 817 A2 bekannt.

Nachteilig an dem aus dem Stand der Technik bekannten Mähdrescher ist, dass die Reversiervorrichtung unmittelbar an die Dreschtrommelwelle angeschlossen ist. Zum Auflegen der Kette müssen die Kettenräder von außen frei zugänglich sein, um dann den Mähdrescher kurzzeitig rückwärts zu bewegen.

Zum Befreien der Dreschvorrichtung von den Verstopfungen ist ein sehr hohes Antriebsmoment und eine dementsprechende Auslegung der Reversiervorrichtung erforderlich, was die räumliche Ausgestaltung der Reversiervorrichtung beeinflusst. Zudem steht an der Dreschvorrichtung generell wenig Bauraum für eine Reversiervorrichtung zur Verfügung, sodass infolge eines unterschiedlichen Aufbaus verschiedener Mähdreschermodelle unmittelbar an der Dreschvorrichtung platzierte Reversiervorrichtungen nicht universell einsetzbar bzw. auf andere Mähdreschermodelle übertragbar sind.

Ausgehend vom vorstehend genannten Stand der Technik liegt der Erfindung die Aufgabe zugrunde, einen Mähdrescher mit einer Reversiervorrichtung der eingangs genannten Art derart weiterzubilden, dass dieser eine modellunabhängige und bauraumsparend ausgeführte Reversiervorrichtung aufweist.

Die Aufgabe wird durch einen Mähdrescher mit den Merkmalen des unabhängigen Patentanspruchs 1 gelöst. Vorteilhafte Ausführungsformen und Weiterbildungen sind den hiervon abhängigen Ansprüchen zu entnehmen.

Gemäß Anspruch 1 wird ein Mähdrescher vorgeschlagen, der eine Dreschvorrichtung sowie eine Häckselvorrichtung, welche durch ein als Riementriebe ausgebildetes, durch eine Antriebsmaschine angetriebenes Antriebsystem angetrieben und trieblich miteinander verbunden sind, sowie eine Reversiervorrichtung zum Reversieren der Dreschvorrichtung umfasst. Erfindungsgemäß ist vorgesehen, dass die Reversiervorrichtung an einer Antriebswelle der Häckselvorrichtung angeordnet ist. Die Erfindung nutzt dabei das bestehende Antriebssystem, welches die Häckselvorrichtung mit der Dreschvorrichtung trieblich verbindet, um eine von der Reversiervorrichtung erzeugte Drehbewegung, die der im Erntebetrieb vorherrschenden Rotationsrichtung zumindest von Häckselvorrichtung und Dreschvorrichtung entgegengesetzt ist, von der Antriebswelle der Häckselvorrichtung auf die Dreschvorrichtung zu übertragen. Hierbei wird sich zunutze gemacht, dass, neben den jeweils erforderlichen Drehmomenten für den Antrieb von Dreschvorrichtung und Häckselvorrichtung, die Drehzahl für den Betrieb der Häckselvorrichtung um ein Mehrfaches größer ist als das der Dreschvorrichtung. Diese Unterschiede in der Drehzahl ergeben sich aus vorhandenen unterschiedlichen Übersetzungsverhältnissen innerhalb des als Riementriebe ausgebildeten Antriebsystems.

Bevorzugt kann die Reversiervorrichtung eine von einem Antriebsmotor angetriebene Abtriebswelle umfassen, auf der ein Abtriebsmittel angeordnet ist, welches mit einem auf der Antriebswelle der Häckselvorrichtung angeordneten Antriebsmittel trieblich verbunden oder verbindbar ist. In Abhängig von der Ausbildung des Abtriebsmittels und des Antriebsmittels kann eine permanente triebliche Verbindung durch diese bestehen, welche beispielsweise durch eine Schaltvorrichtung zu- und abschaltbar sein kann. Alternativ können die Antriebsmittel temporär nur für den Vorgang des Reversierens trieblich miteinander verbunden sein.

Insbesondere können das Abtriebsmittel und das Antriebsmittel als Zahnräder ausgeführt sein. Diese können bei Bedarf temporär miteinander in Eingriff gebracht werden. Denkbar ist auch, dass die Zahnräder permanent miteinander in Eingriff stehen, wobei beispielsweise ein schaltbarer Freilauf oder eine schaltbare Kupplung an der Reversiervorrichtung verhindert, dass im laufenden Betrieb Kräfte von den Zahnrädern übertragen werden.

Alternativ können das Abtriebsmittel und das Antriebsmittel als Riemenscheiben oder Kettenritzel ausgeführt sein, die durch einen Antriebsriemen, beispielsweise durch einen Zahnriemen, oder eine Kette miteinander verbunden sind. Auch hier kann ein schaltbarer Freilauf oder eine schaltbare Kupplung vorgesehen sein.

Gemäß den beiden vorstehend genannten Ausführungen für das Abtriebsmittel und das Antriebsmittel ermöglicht es beispielsweise ein schaltbarer Freilauf und/oder eine schaltbare Kupplung zwischen der Abtriebswelle und dem Abtriebsmittel, dass das Abtriebsmittel und das Antriebsmittel permanent trieblich miteinander verbunden sind, ohne dabei ein Drehmoment des Antriebsmotors der Reversiervorrichtung zu oder auf diesen übertragen.

Gemäß einer bevorzugten Weiterbildung kann der Antriebsmotor als ein Hydraulikmotor oder als ein Elektromotor ausgeführt sein. Eine Ausführung des Antriebsmotors als Hydraulikmotor hat den Vorteil, dass dieser in ein bestehendes Hydrauliksystem des Mähdreschers integrierbar ist. Aufgrund der hohen Leistungsdichte des Hydraulikmotors lässt sich dieser bauraumsparend im Bereich der Häckselvorrichtung unterbringen. Die Ausführung des Antriebsmotors als Elektromotor weist Vorteile hinsichtlich der Ansteuerung sowie der Anordnung von für die Energieversorgung erforderlichen Zuleitungen auf.

Bevorzugt kann die Reversiervorrichtung um eine Schwenkachse schwenkbar an der Häckselvorrichtung angeordnet sein, um das Abtriebsmittel und das Antriebsmittel kraftund/oder formschlüssig miteinander zu verbinden. Vorzugsweise sind das Abtriebsmittel und das Antriebsmittel dabei als Zahnräder ausgeführt, welche bei Bedarf, d.h. zur Durchführung des Reversiervorgangs, durch das Schwenken der Reversiervorrichtung um die Schwenkachse miteinander in Eingriff gebracht werden.

Weiter bevorzugt kann die Reversiervorrichtung durch eine ansteuerbare Positioniereinheit um die Schwenkachse schwenkbar sein. Neben einem manuellen Verschwenken der Reversiervorrichtung durch eine Bedienperson des Mähdreschers, beispielsweise mittels einer Hebelanordnung, ermöglicht das Vorsehen einer ansteuerbaren Positioniereinheit zum Schwenken der Reversiervorrichtung eine komfortable und sichere Handhabung aus der Kabine des Mähdreschers heraus. Die Positioniereinheit kann die Reversiervorrichtung in zwei Endpositionen verschwenken, so dass das als Zahnrad ausgeführte Abtriebsmittel der Reversiervorrichtung mit dem korrespondierend ausgeführten Antriebsmittel in oder außer Eingriff bringbar ist.

Insbesondere kann das Antriebssystem auf einer Maschinenseite einen von einer Hauptantriebsscheibe angetriebenen ersten Hauptriementrieb und zweiten Hauptriementrieb aufweisen, wobei der erste Hauptriementrieb über eine erste Vorgelegestufe die Antriebswelle der Häckselvorrichtung antreibt und durch den zweiten Hauptriementrieb mit einer zur gegenüberliegenden Maschinenseite führenden Durchtriebswelle verbunden ist, wobei auf der gegenüberliegenden Maschinenseite an der Durchtriebswelle ein Variatortrieb angeordnet ist, welcher die Dreschvorrichtung antreibt.

Dabei sollte zum reversierenden Antreiben der Dreschvorrichtung das Antriebsystem von der Antriebsmaschine abkoppelbar sein. Die Antriebsmaschine kann dabei während des Reversierens die Antriebsleistung zu Verfügung stellen, um das Hydrauliksystem zu betreiben, welche den für den Hydraulikmotor als Antriebsmotor der Reversiervorrichtung erforderlichen Hydraulikdruck bereitstellt. Bei einem Elektromotor als Antriebsmotor der Reversiervorrichtung kann die Antriebsmaschine beispielsweise einen Generator antreiben, der die erforderliche elektrische Energie bereitstellt.

Gemäß einer bevorzugten Weiterbildung kann der Mähdrescher eine Steuereinheit umfassen, die dazu eingerichtet ist, zumindest die Reversiervorrichtung anzusteuern.

Weiter bevorzugt kann die Steuereinheit dazu eingerichtet sein, eine schaltbare Kupplungsvorrichtung anzusteuern, welche die Antriebsmaschine mit dem Antriebsystem verbindet. Durch die Ansteuerung der schaltbaren Kupplungsvorrichtung in der Weise, dass die Antriebsmaschine von dem Antriebsystem trieblich getrennt wird, wird das Antriebssystem in einen Betriebszustand überführt, welcher das Reversieren der Dreschvorrichtung mittels des Antriebsystems durch die Reversiereinrichtung ermöglicht.

Die Dreschvorrichtung kann als eine Mehrtrommelanordnung ausgeführt sein, welche zwei oder mehr Trommeln unterschiedlicher Funktionalität innerhalb der Dreschvorrichtung aufweist.

Die vorliegende Erfindung wird nachstehend anhand eines in den Zeichnungen dargestellten Ausführungsbeispieles näher erläutert.

Es zeigen:
- Fig. 1: schematisch und exemplarisch eine Seitenansicht eines selbstfahrenden Mähdreschers;
- Fig. 2: schematisch eine Darstellung eines Teils eines Antriebssystems des Mähdreschers, welches auf einer Maschinenseite angeordnet ist;
- Fig. 3: schematisch eine Darstellung eines Teils des Antriebssystems gemäß Fig. 2, dessen von einer Durchtriebswelle angetriebenen, auf einer gegenüberliegenden Maschinenseite des Mähdreschers vorgesehenen Riementriebe dargestellt sind; und
- Fig. 4: schematisch eine perspektivische Teilansicht eines rückwärtigen Bereichs des Mähdreschers mit einer erfindungsgemäß einer Häckselvorrichtung zugeordneten Reversiervorrichtung.

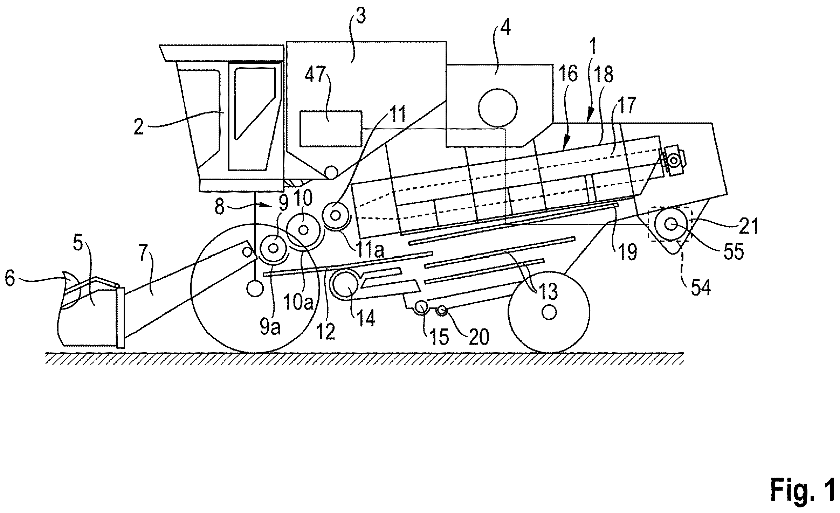

In Fig. 1 ist ein selbstfahrender Mähdrescher 1 dargestellt, der eine Fahrerkabine 2, einen hinter dieser liegenden Korntank 3 sowie anschließend an diesen eine als Verbrennungsmotor ausgeführte Antriebsmaschine 4 aufweist. Weiterhin nimmt der selbstfahrende Mähdrescher 1 in seinem Frontbereich ein - nur teilweise dargestelltes - Vorsatzgerät 5 auf, welches am Einzugskanal 7 des Mähdrescher 1 angeordnet ist.

Das beispielhaft als Getreideschneidwerk ausgeführte Vorsatzgerät 5 erfasst Erntegut mit einer Haspel 6 und schneidet es mittels eines nicht dargestellten Mähwerks bodennah ab. Das Erntegut aus dem Vorsatzgerät 5 gelangt mittels des Einzugskanals 7 in den Mähdrescher 1 und wird einer Dresch- und Trenneinrichtung zugeführt wird. Die Dresch- und Trenneinrichtung umfasst eine Dreschvorrichtung 8, die als Mehrtrommelanordnung ausgebildet ist und hier und vorzugsweise aus einer Vorbeschleunigungstrommel 9, einer Dreschtrommel 10 und einer Abscheidetrommel 11 besteht. Die Dreschvorrichtung 8 kann auch mit nur zwei Trommeln oder mit vier Trommeln ausgeführt sein. Diesen Trommeln 9, 10 und 11 sind jeweils Abscheidekörbe 9a, 10a und 11 a zugeordnet. Die von der Dreschvorrichtung 8 ausgedroschenen Körner oder Früchte im Erntegut gelangen durch die Abscheidekörbe 9a, 10a und 11 a auf einen Vorbereitungsboden 12, über welchen sie schwingend bewegten Sieben einer Reinigungsvorrichtung 13 zugeführt werden. Mit der Reinigungsvorrichtung 13 wirkt ein Reinigungsgebläse 14 zusammen, welches im Bereich der Siebe einen Luftstrom erzeugt, wodurch Spreu und Kurzstroh aus dem Mähdrescher 1 herausbefördert werden. Die durch die Siebe der Reinigungsvorrichtung 13 hindurchtretenden Körner oder Früchte gelangen in eine Körnerschnecke 15, die diese zu einem mit dem Korntank 3 verbundenen, nicht näher dargestellten Körnerelevator transportiert.

Sämtliche Anteile des Erntegutes, welche die Abscheidekörbe 9a, 10a und 11a nicht in Richtung des Vorbereitungsbodens 12 passieren und bei denen es sich im Wesentlichen um Stroh, Kurzstroh, Ähren und gegebenenfalls Grannen handelt, werden mittels der Abscheidetrommel 11 oder, alternativ dazu, mittels einer Strohwendetrommel, einer Abscheideeinrichtung 16 zur Restkornabscheidung zugeführt. Diese Abscheideeinrichtung 16 zur Restkornabscheidung weist bei dem in der Figur 1 dargestellten Mähdrescher 1 ein in Längsrichtung des Mähdreschers verlaufendes, hier und vorzugsweise als Trennrotor ausgeführtes, Abscheideorgan 17 auf. Das Abscheideorgan 17 kann alternativ auch als Hordenschüttler ausgeführt sein.

Das als Trennrotor ausgeführte Abscheideorgan 17 ist weiterhin radial von einem Abscheidegehäuse 18 umschlossen, welches in seinem unteren Bereich nicht näher dargestellte Abscheideöffnungen aufweist und im oberen Bereich geschlossen, also undurchlässig ist. Durch die vorgenannten Abscheideöffnungen des Abscheidegehäuses 18 gelangen Restkorn, Spreu, Ähren und eventuell Kurzstroh auf einen Rücklaufboden 19, der diese Bestandteile der Reinigungseinrichtung 13 zuführt. Die Bestandteile dieses Erntegutstromes, die, wie z. B. nicht ausgedroschene Ähren, von den Sieben der Reinigungsvorrichtung 13 abgeschieden werden, gelangen in eine Förderschnecke 20, die diese Bestandteile des Erntegutes einer nicht näher dargestellten Überkehr zuführt. Die Überkehr fördert diese Bestandteile des Erntegutes als sogenannte Überkehr zurück in die Dreschvorrichtung 8. Das durch das Abscheidegehäuse 18 geförderte Stroh verlässt dieses an dessen hinterem Ende, wo das Stroh in eine Häckselvorrichtung 21 gelangt.

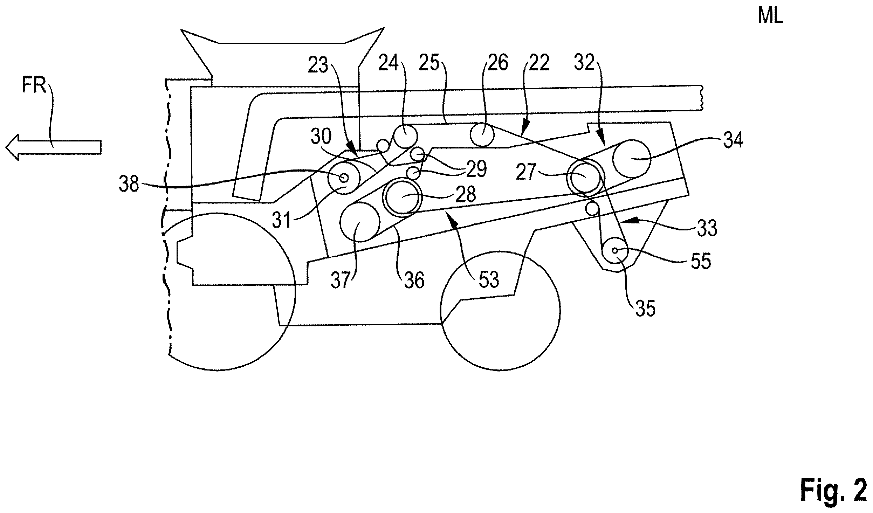

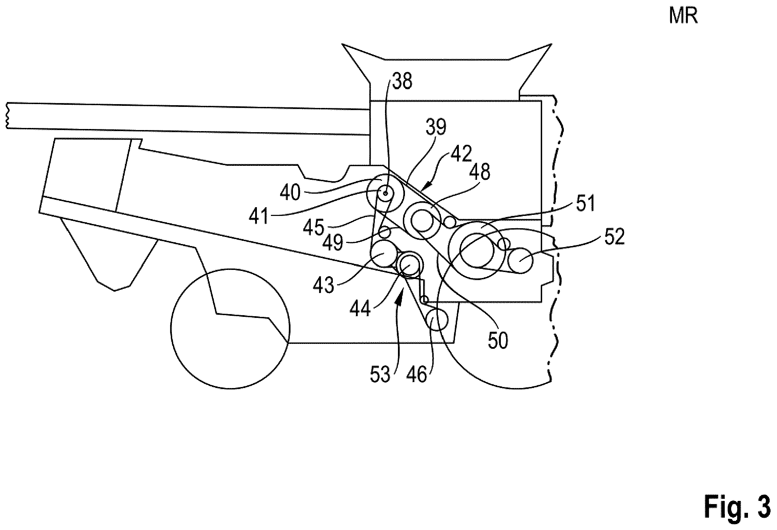

Anhand der Fig. 2, welche eine schematische Darstellung eines Teils eines Antriebssystems 53 des Mähdreschers 1, welches auf einer, in Fahrrichtung FR gesehen, linken Maschinenseite ML angeordnet ist, zeigt, und der Fig. 3, die eine schematische Darstellung eines Teils des Antriebssystems 53 gemäß Fig. 2 zeigt, dessen von einer Durchtriebswelle angetriebenen, auf einer gegenüberliegenden rechten Maschinenseite MR des Mähdreschers 1 vorgesehenen Riementriebe dargestellt sind, wird das Antriebssystem 53 des Mähdreschers 1 näher erläutert.

Der Teil des Antriebssystems 53 des Mähdreschers 1, welcher auf der linken Maschinenseite ML angeordnet ist, besteht aus einem ersten Hauptriementrieb 22 und einem zweiten Hauptriementrieb 23. Dabei werden sowohl der erste Hauptriementrieb 22 als auch der zweite Hauptriementrieb 23 von einer Hauptantriebsscheibe 24 angetrieben, die von der Antriebsmaschine 4 in Rotation versetzt wird. Die Antriebsmaschine 4 und die Hauptantriebsscheibe 24 sind durch eine schaltbare Kupplungsvorrichtung miteinander verbunden. Da die Hauptriemenscheibe 24 zwei unterschiedliche Riementriebe, nämlich den ersten Hauptriementrieb 22 und den zweiten Hauptriementrieb 23 antreibt, ist die Hauptriemenscheibe 24 mit zwei unterschiedlichen Riemenantriebsprofilen versehen, die gleiche oder unterschiedliche Durchmesser aufweisen können.

Der erste Hauptriementrieb 22 weist einen ersten Verbundriemen 25 auf, der über eine Abtriebsscheibe 26 einer Verteilerpumpe, eine erste Vorgelegestufe 27 und eine zweite Vorgelegestufe 28 geführt ist. Außerdem wird der erste Verbundriemen 25 über ein Spannsystem 29 gespannt. Weiterhin führt ein zweiter Verbundriemen 30 von der Hauptriemenscheibe 24 zu einer auf einer Durchtriebswelle 38 angeordneten Abtriebsriemenscheibe 31. Auf die Funktion dieser Durchtriebswelle 38 wird im Zusammenhang mit der Fig. 3 näher eingegangen werden.

Die Fig. 2 verdeutlicht, dass der erste Verbundriemen 25 sowohl mit der ersten Vorgelegestufe 27, die, wie noch weiter erläutert werden wird, für den Antrieb der Abscheideeinrichtung 16 und der Häckselvorrichtung 21 vorgesehen ist, und mit der zweiten Vorgelegestufe 28 im Eingriff steht, die zum Antrieb des Erntevorsatzes 5 und der Reinigungsvorrichtung 13 dient. Da das gesamte Antriebsmoment nicht von der Hauptantriebsscheibe 24 über einen ersten Verbundriemen 25 auf ein einziges Riemenscheibenpaar, sondern auf die beiden Vorgelegestufen 27 und 28 übertragen wird, kann der Verbundriemen 25 mit verhältnismäßig geringer Riemenbreite ausgebildet sein. Außerdem wird dadurch insgesamt ein relativ einfacher Grundaufbau des Antriebssystems 53 geschaffen, das mit einer verhältnismäßig geringen Anzahl von Bauelementen auskommt. Weiterhin ist die am Maschinengestell des Mähdreschers 1 drehbar angeordnete erste Vorgelegestufe 27 neben einem Abschnitt für den Abtrieb des ersten Verbundriemens 25 mit Abschnitten für einen Antrieb eines ersten Riementriebs 32 der zur Abscheideeinrichtung 16 führt, und mit einem zweiten Riementrieb 33, der zu der eine rotierend angetriebene Häckseltrommel umfassende Häckselvorrichtung 21 führt, verbunden.

Der erste Riementrieb 32 weist dabei eine Abtriebsriemenscheibe 34 der Abscheideeinrichtung 16 auf, während Bestandteil des zweiten Riementriebes 33 eine mit der Häckselvorrichtung 21 verbundene Abtriebsriemenscheibe 35 ist. Von der zweiten Vorgelegestufe 28 führt ein dritter Riementrieb 36 zu einer dritten Vorgelegestufe 37, die, genauso wie die erste Vorgelegestufe 27 und zweite die Vorgelegestufe 28, als Verbund aus mehreren Riemenscheiben besteht, die drehfest miteinander verbunden sind und drehbar am Maschinengestell des Mähdreschers 1 gelagert sind.

In der Fig. 3 ist die, in Fahrtrichtung FR des Mähdreschers 1 gesehen, rechte Maschinenseite MR dargestellt. Danach treibt die im Zusammenhang mit Fig. 2 bereits erläuterte Durchtriebswelle 38 eine Abtriebsriemenscheibe 39 an, die einstückig mit Antriebsriemenscheiben 40 und 41 ausgebildet ist. Die Antriebsriemenscheibe 40 ist dabei Bestandteil eines Variatortriebes 42, der die Abscheidetrommel 11, die Dreschtrommel 10 und die Vorbeschleunigungstrommel 9 antreibt. Der Variatortrieb 42 weist neben der Antriebsriemenscheibe 40 eine Abtriebsriemenscheibe 48 sowie einen diese umschlingenden Riemen 49 auf. Von der Antriebsriemenscheibe 40 aus führt ein vierter Riementrieb 45 zu einer Riemenscheibe 43, die trieblich mit einer Riemenscheibe 44 verbunden ist. Letztere treibt eine Abtriebsriemenscheibe 46 an, die für das Reinigungsgebläse 14 vorgesehen ist.

Die Dreschvorrichtung 8 erfordert wie auch die als Trennrotor ausgeführte Abscheideeinrichtung 16 in erster Linie ein hohes Drehmoment für den Antrieb. Von dem Variatortrieb 42 aus führt ein fünfter Riementrieb 50 zu einer Riemenscheibe 51, die trieblich mit einer Riemenscheibe 52 verbunden ist. Die Riemenschiebe 51 treibt die Dreschtrommel 10 und die Riemenscheibe 52 treibt die Vorbeschleunigungstrommel 9 an. Die Drehzahl der Dreschtrommel 10 ist in Abhängigkeit von der Fruchtart und/oder den vorherrschenden Erntebedingungen einstellbar, wobei die maximale Drehzahl kleiner als 1000 U/min ist.

Die Drehzahlen von Vorbeschleunigungstrommel 9 und Abscheidetrommel 11 ändern sich synchron mit der Verstellung der Drehzahl der Dreschtrommel 10. Hingegen beträgt die Antriebsdrehzahl der Häckseltrommel der Häckselvorrichtung 21 ein Vielfaches der Drehzahl der Dreschtrommel 10, insbesondere mehr als 3000 U/min. Die unterschiedlichen Drehzahlen für das Antreiben der Dreschvorrichtung 8 und der Häckseltrommel der Häckselvorrichtung 21 resultieren aus den jeweiligen Übersetzungsverhältnissen innerhalb des Antriebssystems 53.

Einer innerhalb des Dreschwerkes 8 auftretenden Verstopfung wird durch ein Reversieren der Trommeln 9, 10, 11 begegnet. Um das Reversieren der Trommeln 9, 10, 11 des Dreschwerkes 8 mit einem möglichst geringen Kraftaufwand zu realisieren, ist eine Reversiervorrichtung 54 vorgesehen. Hierzu ist erfindungsgemäß vorgesehen, dass die Dreschvorrichtung 8 mittels einer an der Häckselvorrichtung 21 angeordneten Reversiervorrichtung 54 reversierend antreibbar ist.

Dabei ist mittels der Reversiervorrichtung 54 eine Antriebswelle 55 der Häckseltrommel der Häckselvorrichtung 21 reversierend antreibbar. Durch das Antriebssystem 53 wird die von der Reversiervorrichtung 54 auf die Antriebswelle 55 übertragene Drehzahl von dem zweiten Riementrieb 33 auf die erste Vorgelegestufe 27 übertragen. Der erste Hauptriementrieb 22 überträgt die Drehung auf die Hauptantriebsscheibe 24, welche ihrerseits den zweiten Hauptriementrieb 22 antreibt. Der zweite Verbundriemen 30 überträgt die Drehung von der Hauptriemenscheibe 24 zu der auf der Durchtriebswelle 38 angeordneten Abtriebsriemenscheibe 31. Die Durchtriebswelle 38 überträgt die Drehung auf den Variatortrieb 42 auf der rechten Maschinenseite MR, welcher wiederum über den fünften Riementrieb 50 die Riemenscheibe 51 der Dreschtrommel 10, und mit dieser die Vorbeschleunigungstrommel 9 sowie die Abscheidetrommel 11, antreibt.

Die verschiedenen Übersetzungsverhältnisse innerhalb des Antriebssystems 53 bewirken, dass ein von der Reversiervorrichtung 54 auf die Antriebswelle 55 der Häckselvorrichtung 21 aufgebrachtes Drehmoment, welches in Relation zum Drehmoment, welches für das Reversieren unmittelbar auf die Dreschtrommel 10 aufzubringen wäre, klein ist, in der Weise verstärkt wird, dass dies zum Reversieren der Dreschvorrichtung 8 zur Beseitigung einer Verstopfung ausreicht.

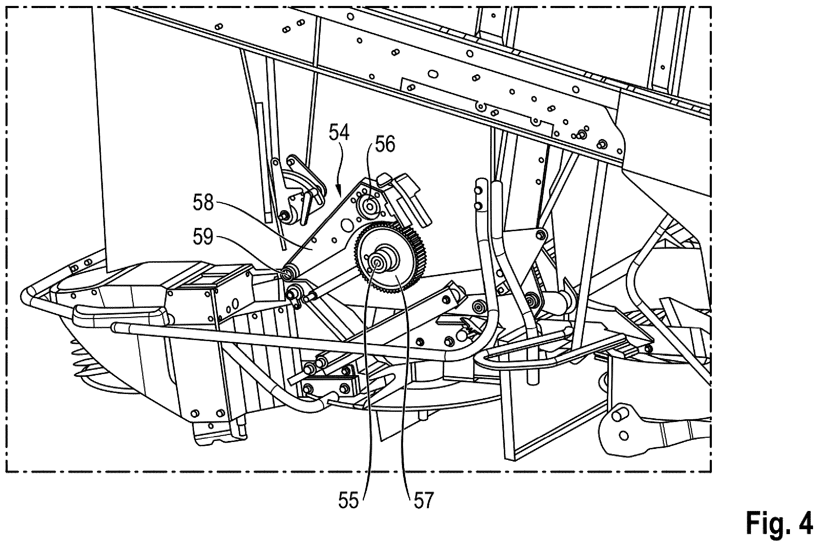

In Fig. 4 ist schematisch eine Teilansicht eines rückwärtigen Bereichs des Mähdreschers 1 mit einer erfindungsgemäß der Häckselvorrichtung 21 zugeordneten Reversiervorrichtung 54 dargestellt.

Die Reversiervorrichtung 54 umfasst eine von einem Antriebsmotor angetriebene Abtriebswelle 56, auf der ein Abtriebsmittel angeordnet ist, welches mit einem auf der Antriebswelle 55 der Häckselvorrichtung 21 angeordneten Antriebsmittel 57 trieblich verbunden oder verbindbar ist. Die Reversiervorrichtung 54 umfasst weiterhin ein rahmenartiges Gehäuse 58, welches um eine zur Antriebswelle 55 achsparallel am Mähdrescher 1 angeordnete Schwenkachse 59 schwenkbar ist. Das Antriebsmittel 57 ist hier und vorzugsweise als ein Zahnrad ausgeführt. Das Abtriebsmittel der Reversiervorrichtung 54 ist korrespondierend zum Antriebsmittel 57 gleichfalls als Zahnrad ausgeführt. Der Antriebsmotor und das Abtriebsmittel der der Reversiervorrichtung 54 sind in dem Gehäuse 58 angeordnet.

Die Reversiervorrichtung 54 ist durch eine ansteuerbare Positioniereinheit um die Schwenkachse 59 schwenkbar. Die Positioniereinheit kann die Reversiervorrichtung 54 in zwei Endpositionen verschwenken, so dass das als Zahnrad ausgeführte Abtriebsmittel der Reversiervorrichtung 54 mit dem korrespondierend ausgeführten Antriebsmittel 57 in oder außer Eingriff bringbar ist. Durch das Schwenken der Reversiervorrichtung 54 um die Schwenkachse 59 sind das Abtriebsmittel und das Antriebsmittel 57 temporär kraftund/oder formschlüssig miteinander verbindbar.

Denkbar ist auch, dass, abhängig von ihrer Ausführung, das Abtriebsmittel und das Antriebsmittel 57 permanent miteinander in Eingriff stehen, wobei beispielsweise ein schaltbarer Freilauf oder eine schaltbare Kupplung an der Reversiervorrichtung verhindert, dass im laufenden Betrieb Kräfte von diesen übertragen werden.

Der Antriebsmotor kann als ein Hydraulikmotor oder als ein Elektromotor ausgeführt sein. Die Positioniereinheit kann ebenfalls als ein Hydraulikmotor oder als ein Elektromotor ausgeführt sein. Vorzugsweise arbeiten sowohl der Antriebsmotor als auch die Positioniereinheit der Reversiervorrichtung 54 nach dem gleichen Wirkprinzip.

Der Mähdrescher 1 umfasst eine Steuereinheit 47, die dazu eingerichtet ist, die Reversiervorrichtung 54 anzusteuern. Die Steuereinheit 47 kann zudem dazu eingerichtet sein, die schaltbare Kupplungsvorrichtung anzusteuern, welche die Antriebsmaschine 4 mit dem Antriebsystem 53 verbindet. Analog dem Straßenfahrmodus steht für andere Arbeitsaggregate des Mähdreschers 1, die vom Antriebsystem 53 unabhängig zu betreiben sind, Antriebsleistung zur Verfügung, insbesondere für einen Hydraulikreislauf des Mähdreschers 1. Somit ist zumindest eine Hydraulikpumpe betreibbar, welche die Positioniereinheit und den Antriebsmotor Reversiervorrichtung 54 mit Hydrauliköl beaufschlagt. Alternativ kann bei einer Ausführung von Antriebsmotor und Positioniereinheit der Reversiervorrichtung als Elektromotor die Antriebsmaschine 4 beispielsweise einen Generator antreiben, der die erforderliche elektrische Energie bereitstellt.

Die Reversiervorrichtung 54 überträgt somit die von dem Antriebsmotor auf das Abtriebsmittel übertragene Drehzahl auf das Antriebsmittel 57 an der Antriebswelle 55 der Häckselvorrichtung 21. Von dort leitet das Antriebssystem 53 der Dreschvorrichtung 8 zu, wobei durch die verschiedenen Übersetzungsverhältnisse innerhalb des Antriebssystem 53 das für das Reversieren der Dreschvorrichtung 8 erforderliche Drehmoment erzeugt wird.

**Bezugszeichenliste**

| | | | |
|---|---|---|---|
| 1 | Mähdrescher | 31 | Abtriebsriemenscheibe |
| 2 | Fahrerkabine | 32 | Erster Riementrieb |
| 3 | Korntank | 33 | Zweiter Riementrieb |
| 4 | Antriebsmaschine | 34 | Abtriebsriemenscheibe |
| 5 | Vorsatzgerät | 35 | Abtriebsriemenscheibe |
| 6 | Haspel | 36 | Dritter Riementrieb |
| 7 | Einzugskanal | 37 | Dritte Vorgelegestufe |
| 8 | Dreschvorrichtung | 38 | Durchtriebswelle |
| 9 | Vorbeschleunigungstrommel | 39 | Abtriebsriemenscheibe |
| 10 | Dreschtrommel | 40 | Antriebsriemenscheibe |
| 11 | Abscheidetrommel | 41 | Antriebsriemenscheibe |
| 9a | Abscheidekorb | 42 | Variatortrieb |
| 10a | Abscheidekorb | 43 | Riemenscheibe |
| 11a | Abscheidekorb | 44 | Riemenscheibe |
| 12 | Vorbereitungsboden | 45 | Vierter Riementrieb |
| 13 | Reinigungsvorrichtung | 46 | Abtriebsriemenscheibe |
| 14 | Reinigungsgebläse | 47 | Steuereinheit |
| 15 | Körnerschnecke | 48 | Abtriebsriemenscheibe |
| 16 | Abscheideeinrichtung | 49 | Riemen |
| 17 | Abscheideorgan | 50 | Fünfter Riementrieb |
| 18 | Abscheidegehäuse | 51 | Riemenscheibe |
| 19 | Rücklaufboden | 52 | Riemenscheibe |
| 20 | Förderschnecke | 53 | Antriebssystems |
| 21 | Häckselvorrichtung | 54 | Reversiervorrichtung |
| 22 | Erster | 55 | Hauptriementrieb Antriebswelle |
| 23 | Zweiter Hauptriementrieb | 56 | Abtriebswelle |
| 24 | Hauptantriebsscheibe | 57 | Antriebsmittel |
| 25 | Erster Verbundriemen | 58 | Gehäuse |
| 26 | Abtriebsscheibe | 59 | Schwenkachse |
| 27 | Erste Vorgelegestufe | FR | Fahrtrichtung |
| 28 | Zweite Vorgelegestufe | ML | Linke Maschinenseite |
| 29 | Spannsystem | MR | Rechte Maschinenseite |
| 30 | Zweiter Verbundriemen | | |

## Patentansprüche

1. Mähdrescher (1), umfassend eine Dreschvorrichtung (8) sowie eine Häckselvorrichtung (21), welche durch ein als Riementriebe (32, 33, 36, 46, 50) ausgebildetes, durch eine Antriebsmaschine (4) angetriebenes Antriebsystem (53) angetrieben und trieblich miteinander verbunden sind, sowie eine Reversiervorrichtung (54) zum Reversieren der Dreschvorrichtung (8), **dadurch gekennzeichnet, dass** die Reversiervorrichtung (54) an einer Antriebswelle (55) der Häckselvorrichtung (21) angeordnet ist.

2. Mähdrescher (1) nach Anspruch 1, **dadurch gekennzeichnet, dass** die Reversiervorrichtung (54) eine von einem Antriebsmotor angetriebene Abtriebswelle (56) umfasst, auf der ein Abtriebsmittel angeordnet ist, welches mit einem auf der Antriebswelle (55) der Häckselvorrichtung (21) angeordneten Antriebsmittel (57) trieblich verbunden oder verbindbar ist.

3. Mähdrescher (1) nach Anspruch 2, **dadurch gekennzeichnet, dass** das Abtriebsmittel und das Antriebsmittel (57) als Zahnräder ausgeführt sind.

4. Mähdrescher (1) nach Anspruch 2, **dadurch gekennzeichnet, dass** das Abtriebsmittel und das Antriebsmittel (57) als Riemenscheiben oder Kettenritzel ausgeführt sind, die durch einen Antriebsriemen oder eine Kette miteinander verbunden sind.

5. Mähdrescher (1) nach einem der Ansprüche 2 bis 4, **dadurch gekennzeichnet, dass** der Antriebsmotor als ein Hydraulikmotor oder als ein Elektromotor ausgeführt ist.

6. Mähdrescher (1) nach einem der vorangehenden Ansprüche, **dadurch gekennzeichnet, dass** die Reversiervorrichtung (54) um eine Schwenkachse (59) schwenkbar an der Häckselvorrichtung (21) angeordnet ist, um das Abtriebsmittel und das Antriebsmittel (57) kraft- und/oder formschlüssig miteinander zu verbinden.

7. Mähdrescher (1) nach Anspruch 6, **dadurch gekennzeichnet, dass** die Reversiervorrichtung (54) durch eine ansteuerbare Positioniereinheit um die Schwenkachse (59) schwenkbar ist.

8. Mähdrescher (1) nach einem der vorangehenden Ansprüche, **dadurch gekennzeichnet, dass** das Antriebssystem (53) auf einer Maschinenseite (ML) einen von einer Hauptantriebsscheibe (24) angetriebenen ersten Hauptriementrieb (22) und zweiten Hauptriementreib (23) aufweist, wobei der erste Hauptriementrieb (22) über eine erste Vorgelegestufe (27) die Antriebswelle (55) der Häckselvorrichtung (21) antreibt und durch den zweiten Hauptriementrieb (23) mit einer zur gegenüberliegenden Maschinenseite (MR) führenden Durchtriebswelle (35) verbunden ist, wobei auf der gegenüberliegenden Maschinenseite (MR) an der Durchtriebswelle (35) ein Variatortrieb (42) angeordnet ist, welcher die Dreschvorrichtung (8) antreibt.

9. Mähdrescher (1) nach einem der vorhergehenden Ansprüche, **dadurch gekennzeichnet, dass** zum reversierenden Antreiben der Dreschvorrichtung (8) das Antriebsystem (53) von der Antriebsmaschine (4) abkoppelbar ist.

10. Mähdrescher (1) nach einem der vorhergehenden Ansprüche, **dadurch gekennzeichnet, dass** der Mähdrescher (1) eine Steuereinheit (47) umfasst, die dazu eingerichtet ist, die Reversiervorrichtung (54) anzusteuern.

11. Mähdrescher (1) nach Anspruch 10, **dadurch gekennzeichnet, dass** die Steuereinheit (47) dazu eingerichtet ist, eine schaltbare Kupplungsvorrichtung anzusteuern, welche die Antriebsmaschine (4) mit dem Antriebsystem (53) verbindet.

12. Mähdrescher (1) nach einem der vorangehenden Ansprüche, **dadurch gekennzeichnet, dass** die Dreschvorrichtung (8) als eine Mehrtrommelanordnung (9, 10, 11) ausgeführt ist.

## Claims

1. A combine harvester (1), comprising a threshing device (8) as well as a chopping device (21) which are driven and operatively connected together by a drive system (53) which is configured as a belt drive (32, 33, 36, 46, 50) and driven by a driving engine (4), as well as a reversing device (54) for reversing the threshing device (8), **characterized in that** the reversing device (54) is disposed on a drive shaft (55) of the chopping device (21).

2. The combine harvester (1) according to claim 1, **characterized in that** the reversing device (54) comprises a take-off shaft (56) which is driven by a driving motor, on which take-off shaft a take-off means is disposed which is operatively connected or connectable to a driving means (57) disposed on the drive shaft (55) of the chopping device (21).

3. The combine harvester (1) according to claim 2, **characterized in that** the take-off means and the driving means (57) are constructed as toothed wheels.

4. The combine harvester (1) according to claim 2, **characterized in that** the take-off means and the driving means (57) are configured as belt pulleys or chain sprockets which are connected together by a drive belt or a chain.

5. The combine harvester (1) according to one of claims 2 to 4, **characterized in that** the driving motor is configured as a hydraulic motor or as an electric motor.

6. The combine harvester (1) according to one of the preceding claims, **characterized in that** the reversing device (54) is pivotally disposed on the chopping device (21) about a pivot axis (59) in order to connect the take-off means and the driving means (57) together in a force-fitting and/or interlocking manner.

7. The combine harvester (1) according to claim 6, **characterized in that** the reversing device (54) is pivotable about the pivot axis (59) by means of a controllable positioning unit.

8. The combine harvester (1) according to one of the preceding claims, **characterized in that** on one side of the machine (ML), the drive system (53) has a first main belt drive (22) and second main belt drive (23) driven by a main drive pulley (24), wherein the first main belt drive (22) drives the drive shaft (55) of the chopping device (21) via a first reduction gear stage (27) and is connected by the second main belt drive (23) to a through drive shaft (35) leading to the opposite side of the machine (MR), wherein on the opposite side of the machine (MR), a variator drive (42) which drives the threshing device (8) is disposed on the through drive shaft (35).

9. The combine harvester (1) according to one of the preceding claims, **characterized in that** the drive system (53) can be uncoupled from the driving engine (4) in order to reverse the drive of the threshing device (8).

10. The combine harvester (1) according to one of the preceding claims, **characterized in that** the combine harvester (1) comprises a control unit (47) which is configured to control the reversing device (54).

11. The combine harvester (1) according to claim 10, **characterized in that** the control unit (47) is configured to control a switchable clutch device which connects the driving engine (4) to the drive system (53).

12. The combine harvester (1) according to one of the preceding claims, **characterized in that** the threshing device (8) is constructed as a multiple drum assembly (9, 10, 11).

## Revendications

1. Moissonneuse-batteuse (1) comprenant un dispositif batteur (8) et un dispositif hacheur (21) qui sont entraînés par un système d'entraînement (53), réalisé sous forme de transmissions par courroie (32, 33, 36, 46, 50) et entraîné par une machine d'entraînement (4), et qui sont reliés l'un à l'autre du point de vue de l'entraînement, ainsi qu'un dispositif d'inversion (54) destiné à l'inversion du dispositif de battage (8), **caractérisée en ce que** le dispositif d'inversion (54) est placé sur un arbre menant (55) du dispositif hacheur (21).

2. Moissonneuse-batteuse (1) selon la revendication 1, **caractérisée en ce que** le dispositif d'inversion (54) comprend un arbre mené (56) qui est entraîné par un moteur d'entraînement et sur lequel est placé un organe mené qui est relié ou peut être relié du point de vue de l'entraînement à un moyen d'entraînement (57) disposé sur l'arbre menant (55) du dispositif hacheur (21).

3. Moissonneuse-batteuse (1) selon la revendication 2, **caractérisée en ce que** l'organe mené et le moyen d'entraînement (57) sont réalisés sous forme de roues dentées.

4. Moissonneuse-batteuse (1) selon la revendication 2, **caractérisée en ce que** l'organe mené et le moyen d'entraînement (57) sont réalisés sous forme de poulies à courroie ou de pignons à chaîne, qui sont reliés entre eux/elles par une courroie d'entraînement ou une chaîne.

5. Moissonneuse-batteuse (1) selon une des revendications 2 à 4, **caractérisée en ce que** le moteur d'entraînement est réalisé sous forme de moteur hydraulique ou de moteur électrique.

6. Moissonneuse-batteuse (1) selon une des revendications précédentes, **caractérisée en ce que** le dispositif d'inversion (54) est monté sur le dispositif hacheur (21) avec possibilité de pivotement autour d'un axe de pivotement (59), aux fins de relier l'organe mené et le moyen d'entraînement (57) entre eux par adhérence et/ou par complémentarité de formes.

7. Moissonneuse-batteuse (1) selon la revendication 6, **caractérisée en ce que** le dispositif d'inversion (54) peut être pivoté autour de l'axe de pivotement (59) par une unité de positionnement pouvant être activée.

8. Moissonneuse-batteuse (1) selon une des revendications précédentes, **caractérisée en ce que** le système d'entraînement (53) présente sur un côté de machine (ML), une première courroie principale (22), entraînée par une poulie d'entraînement principale (24), et une deuxième courroie principale (23), où la première courroie principale (22) entraîne l'arbre d'entraînement (55) du dispositif hacheur (21) par l'intermédiaire d'un premier étage de renvoi (27) et est reliée par la deuxième courroie principale (23) à un arbre passant (35) menant au côté de machine (MR) opposé, sachant que sur le côte de machine (MR) opposé, il est prévu sur l'arbre passant (35) un variateur (42) qui entraîne le dispositif batteur (8).

9. Moissonneuse-batteuse (1) selon une des revendications précédentes, **caractérisée en ce que**, pour l'entraînement d'inversion du dispositif batteur (8), le système d'entraînement (53) peut être désaccouplé de la machine d'entraînement (4).

10. Moissonneuse-batteuse (1) selon une des revendications précédentes, **caractérisée en ce que** la moissonneuse-batteuse (1) comprend une unité de commande (47) qui est conçue pour activer le dispositif d'inversion (54).

11. Moissonneuse-batteuse (1) selon la revendication 10, **caractérisée en ce que** l'unité de commande (47) est conçue pour activer un dispositif d'accouplement commandé qui relie la machine d'entraînement (4) au système d'entraînement (53).

12. Moissonneuse-batteuse (1) selon une des revendications précédentes, **caractérisée en ce que** le dispositif batteur (8) est réalisé sous la forme d'un dispositif à tambours multiples (9, 10, 11).
